# EUROPEAN PATENT APPLICATION

(11) **EP 1 873 438 A1**
(43) Date of publication of application: **02.01.2008**
(21) Application number: 06116350.7
(22) Date of filing: 29.06.2006
(51) Int. Cl.: F16L 25/00, F16L 33/26

(54) **Flexible hose combination**

(71) Applicant: Plastiflex Belgium, 3583 Paal-Beringen (BE)
(72) Inventor: Diels, Domin, 2275 Gierle (BE)
(74) Representative: Sarlet, Steven Renaat Irène

(57) **Abstract**

The invention relates to a flexible hose combination comprising a plurality of hose sections (1,2) which are provided for being connected to each other for forming a long length flexible hose. Each hose section has a flexible corrugated body (3,4) extending between a first extremity (5) with a male coupling member (6) and a second extremity (7) with a female coupling member (8). The male and female coupling members are integral with the flexible corrugated body and are adapted to mate with each other to obtain a substantially fluid-tight connection between the hose sections. Preferably, the flexible hose combination further comprises a coupling piece. In a preferred embodiment, the flexible hose combination is a pool cleaning hose, the coupling piece and/or the hose sections (1,2) being adapted to be connected to a pool skimmer/filter, a manual head for manual pool cleaning, or an automatic pool cleaning head for automatic pool cleaning.

## Description

### Technical field

The present invention relates to a flexible hose combination comprising a plurality of hose sections which are provided for being connected to each other for forming a long length flexible hose.

### Background art

Long length flexible hoses are known which comprise a single piece flexible corrugated body extending between two extremities at which coupling members are formed for coupling the hose to a further tubular member, which may for example be the mouth of a fluid supply or drainage device, a nozzle or a vacuum head, etc. For distributing such hoses from the manufacturer to the end user, the single piece corrugated body is mostly simply rolled up, the roll being held together by means of pieces of wire or plastic strips or the like. Usually, no package is provided since the roll takes up a large volume and a suitable package would be too costly.

The long length flexible hoses thus have the disadvantage that even when rolled up they take up a large volume, which leads to high costs for distributing them from the manufacturer to the stores and also involves storage difficulties for the end user. Another disadvantage is that when a long length flexible hose is stored for a longer period of time in for example a garden shed in rolled up state, it partly retains its bent shape when being unrolled again for use.

### Disclosure of the invention

It is an aim of the present invention to provide a long length flexible hose which can be turned into a more compact form for distribution and storage.

This aim is achieved according to the invention with a flexible hose combination showing the technical characteristics of the characterising part of the first claim.

The flexible hose combination of the invention comprises a plurality of hose sections which are provided for being connected to each other for forming a long length flexible hose. Each hose section has a flexible corrugated body extending between a first extremity with a male coupling member and a second extremity with a female coupling member. The male and female coupling members are integral with the flexible corrugated body and are adapted to mate with each other to obtain a substantially fluid-tight connection between the hose sections. In this way, the hose sections can be assembled to a long length flexible hose through which fluids can be transported substantially without leakage.

The feature that the male and female coupling members are integral with the flexible corrugated body means that the whole is made from the same material in a single process step, for example by moulding a mouldable plastic material, so that the manufacturing costs remain limited.

By dividing up the long length flexible hose into a plurality of sections according to the invention, the shorter hose sections can be packed in a side by side relationship, leading to a reduced volume with respect to the roll of the prior art. This reduces distribution costs, amongst other because more long length hoses can be loaded onto the same truck, less storage space is required in warehouses etc. The reduced volume is also advantageous towards the end user, since storage space is often limited in storage rooms or garden sheds or the like. Furthermore, the reduced volume has the advantage that a suitable package becomes also less costly for the manufacturer, so that it becomes more likely that the flexible hose combination of the invention would be sold in a package. This in turn reduces the risk of damage during distribution or later on during storage at the end user.

Since the hose sections all have the same male and female members, the flexible hose combination of the invention is easy to assemble to a long length flexible hose, since the user does not have to take a specific order of the hose sections into account. This also has the advantage that all hose sections can be manufactured using the same mould.

Preferably the hose sections have substantially equal lengths, which can further facilitate packaging. However, the hose sections may also have different lengths.

In a preferred embodiment of the flexible hose combination of the invention, the male coupling member is provided with at least one external annular protrusion/recess for engaging a complementary internal annular recess/protrusion in the female coupling member. In this way, the male coupling member is snap-fitted into the female member. This has the advantage that a strong connection between the male and female coupling members can be achieved, which can assure fluid-tightness and reduce the risk of undesired disconnection of the hose sections from each other.

Preferably, the length of the male coupling member is such that in coupled state it protrudes into the flexible corrugated body of another of the hose sections. This means that, when inserted into a female coupling member, the male coupling member extends beyond this female coupling member into the corrugated body. This can further assure the fluid-tightness of the hose.

Preferably, the male and female coupling members have truncated, slightly conical shapes. This means that the diameter of the male member generally increases from the edge of the first extremity towards the corrugated body and that the diameter of the female member generally decreases from the edge of the second extremity towards the corrugated body. In this way, the male member can be inserted more easily into the female member.

The flexible hose sections are preferably constructed in a mouldable material by means of a moulding process. Suitable moulding processes for producing the flexible hose sections include blow-moulding processes, vacuum-moulding processes or any other moulding process known to the person skilled in the art. In a blow-moulding process molten plastic material is extruded in the interior of the mould, and then blown onto its internal surface by applying pressurised air to the centre of the plastic material. In the case of a vacuum-moulding process the mould is provided with narrow gaps which extend circumferentially and are a few tenths of a millimetre wide. Through these gaps a vacuum which is created around the outside of the mould is applied to the plastic material which is extruded inside the mould, so that the plastic material is sucked onto the internal surface of the mould.

In a preferred embodiment of the flexible hose combination of the invention, the flexible hose combination further comprises a coupling piece for coupling the hose combination to a further tubular member. This coupling piece comprises a rigid hollow body with a first end connected or connectable on one of the extremities of one of the hose sections, i.e. on the extremity with the male and/or the female coupling members, and a second end connectable to the further tubular member.

In a preferred embodiment of the flexible hose combination including the coupling piece, the flexible corrugated body of each hose section comprises helically wound corrugations with a larger diameter than that of the first and/or second extremities and that the first end of the coupling piece comprises an internal screw-thread complementary to the helically wound corrugations. In this way, the coupling piece can be very easily connected on one of the hose sections by sliding it over the male/female coupling member and afterwards screwing it onto the corrugations.

In an alternative embodiment of the flexible hose combination including the coupling piece, the first end of the coupling piece is permanently welded to one of the extremities of one of the flexible hose sections. This has the advantage that the coupling piece is permanently connected to one of the flexible hose connections, so that undesired removal can be prevented.

In another alternative embodiment of the flexible hose combination including the coupling piece, the coupling piece comprises a swivel member which is permanently welded to one of the extremities of one of the flexible hose sections and which is rotatably held in the first end of the coupling piece. This embodiment has the advantage that the coupling piece is permanently connected to one of the flexible hose connections, so that undesired removal can be prevented, while still being able to swivel around the extremity.

In another alternative embodiment of the flexible hose combination including the coupling piece, the coupling piece comprises a swivel member which is adapted for being snap-fitted to one of the extremities of one of the flexible hose sections and which is rotatably held in the first end of the coupling piece. This embodiment has the advantage that the coupling piece is removably connected to one of the flexible hose connections, while swivelling around the extremity is enabled.

The above described embodiments of the flexible hose combination including the coupling piece are extremely useful in the field of pool cleaning, both for manual pool cleaning operations as for automatic pool cleaners. For application in this field, the second end of the coupling piece and/or the first and/or second extremities of the hose sections are adapted to be connected to at least one of the following: a pool skimmer/filter, a manual head for manual pool cleaning, an automatic pool cleaning head for automatic pool cleaning.

### Brief description of the drawings

The invention will be further elucidated by means of the following description and the appended figures.

Figure 1 shows a first embodiment of a flexible hose combination according to the invention.

Figure 2 shows a second embodiment of a flexible hose combination according to the invention, comprising a screw-on coupling piece.

Figure 3 shows a third embodiment of a flexible hose combination according to the invention, comprising a permanently welded coupling piece.

Figure 4 shows a fourth embodiment of a flexible hose combination according to the invention, comprising a permanently welded swivel coupling piece.

Figure 5 shows a fifth embodiment of a flexible hose combination according to the invention, comprising a screw-on coupling piece.

Figure 6 shows a sixth embodiment of a flexible hose combination according to the invention, comprising a snap-fitted swivel coupling piece.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

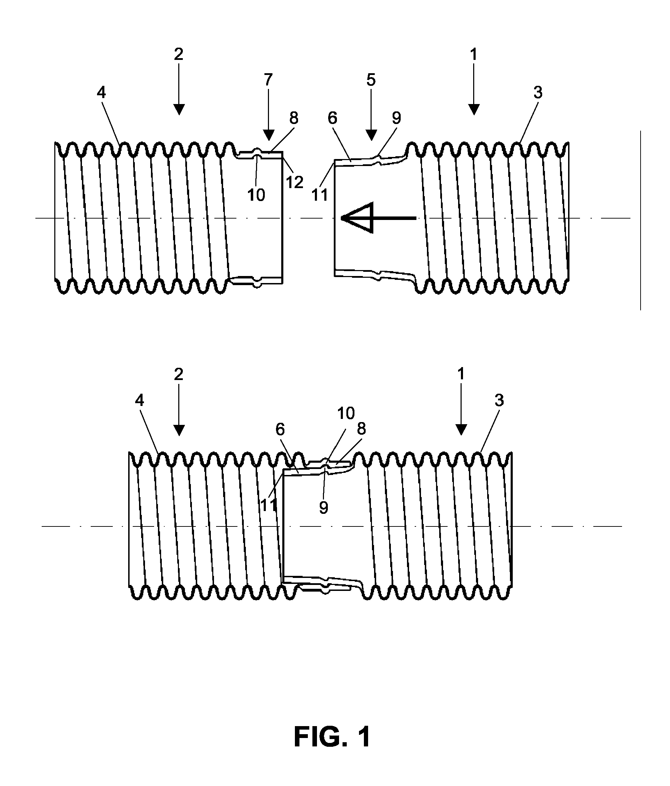

The flexible hose combination which is shown in figure 1 comprises a plurality of hose sections 1, 2 of substantially equal length, two of which are partly shown, which are provided for being connected to each other for forming a long length flexible hose. Each hose section has a flexible corrugated body 3, 4 extending between a first extremity 5 with a male coupling member 6 and a second extremity 7 with a female coupling member 8. The male and female coupling members 6, 8 are integral with the flexible corrugated body 3, 4, which means that the whole is made from the same material in a single process step, for example by moulding a mouldable plastic material, so that the manufacturing costs remain limited. The male and female coupling members 6, 8 are adapted to mate with each other to obtain a substantially fluid-tight connection between the hose sections 1, 2.

All the hose sections 1, 2 of the flexible hose combination of figure 1 have the same male and female coupling members 6, 8. In this way, they are interchangeable with each other, so that they are easy to assemble to the long length flexible hose, since the user does not have to take a specific order of the hose sections into account. This also has the advantage that all hose sections 1, 2 can be manufactured using the same mould.

Advantageously, the length of the hose section 1, 2 is about 0.8 or 1 m. However, any other length is also possible.

The male coupling member 6 is provided with an external annular protrusion 9 for engaging a complementary internal annular recess 10 in the female coupling member 8. These function to enhance the connection between the male and female coupling members 6, 8, which can assure fluid-tightness and reduce the risk of undesired disconnection of the hose sections 1, 2 from each other. Alternatively, the male coupling member 6 can have multiple external annular protrusions for engaging multiple internal annular recesses in the female coupling member 8 or the male coupling member 6 can have one or more external annular recesses for engaging one or more complementary internal annular protrusions in the female coupling member 8.

The length of the male coupling member 6 is such that in coupled state it protrudes into the flexible corrugated body 4 of the hose section 2. The male coupling member 6 extends beyond the female coupling member 8 into the corrugated body 4. This can further assure the fluid-tightness of the assembled hose.

As shown in figure 1, the male and female coupling members 6, 8 have truncated, slightly conical shapes. This means that the diameter of the male member 6 generally increases from the edge 11 of the first extremity 5 towards the corrugated body 3 and that the diameter of the female member 8 generally decreases from the edge 12 of the second extremity 7 towards the corrugated body 4. In this way, the male member 6 can be inserted more easily into the female member 8.

The flexible hose sections 1, 2 are constructed in a mouldable material by means of a moulding process. Suitable moulding processes for producing the flexible hose sections 1, 2 include blow-moulding processes, vacuum-moulding processes or any other moulding process known to the person skilled in the art. In a blow-moulding process molten plastic material is extruded in the interior of the mould, and then blown onto its internal surface by applying pressurised air to the centre of the plastic material. In the case of a vacuum-moulding process the mould is provided with narrow gaps which extend circumferentially and are a few tenths of a millimetre wide. Through these gaps a vacuum which is created around the outside of the mould is applied to the plastic material which is extruded inside the mould, so that the plastic material is sucked onto the internal surface of the mould. Suitable mouldable materials for the flexible hose sections 1, 2 are the following materials: thermoplastic elastomers (Santoprene, Forprene, Vyram,...) polyolefins, polyethylene, metallocene polyolefins, polypropylene, PVC, rubbers or any combination of these materials, or any other material deemed suitable by the person skilled in the art.

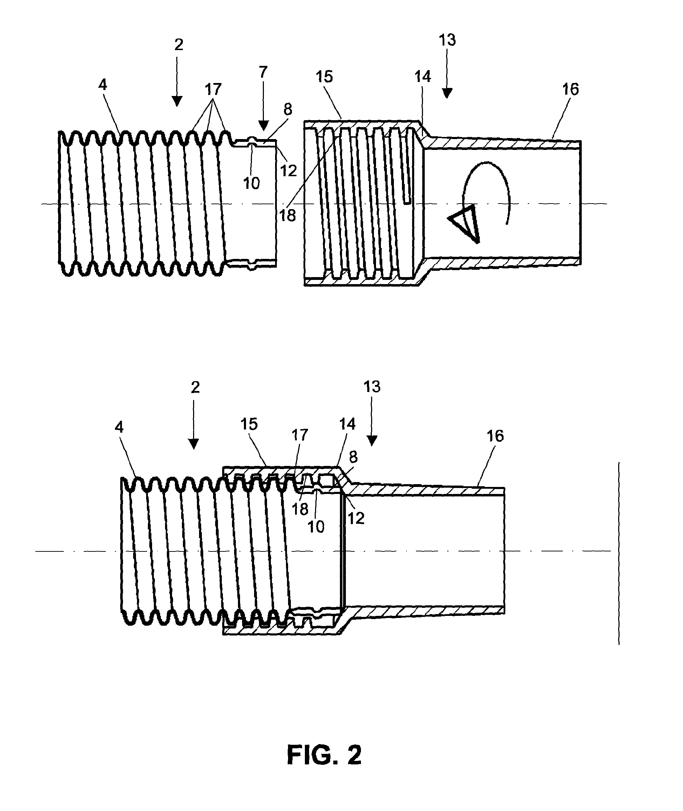

The flexible hose combinations of figures 2-6 differ from that of figure 1 in that they further comprise a coupling piece 13 for coupling the hose combination to a further tubular member, such as for example the mouth of a fluid supply or drainage device, a nozzle or a vacuum head, etc. The coupling piece 13 comprises a rigid hollow body 14 with a first end 15 connected or connectable on one of the extremities 5, 7 of one of the hose sections and a second end 16 connectable to the further tubular member.

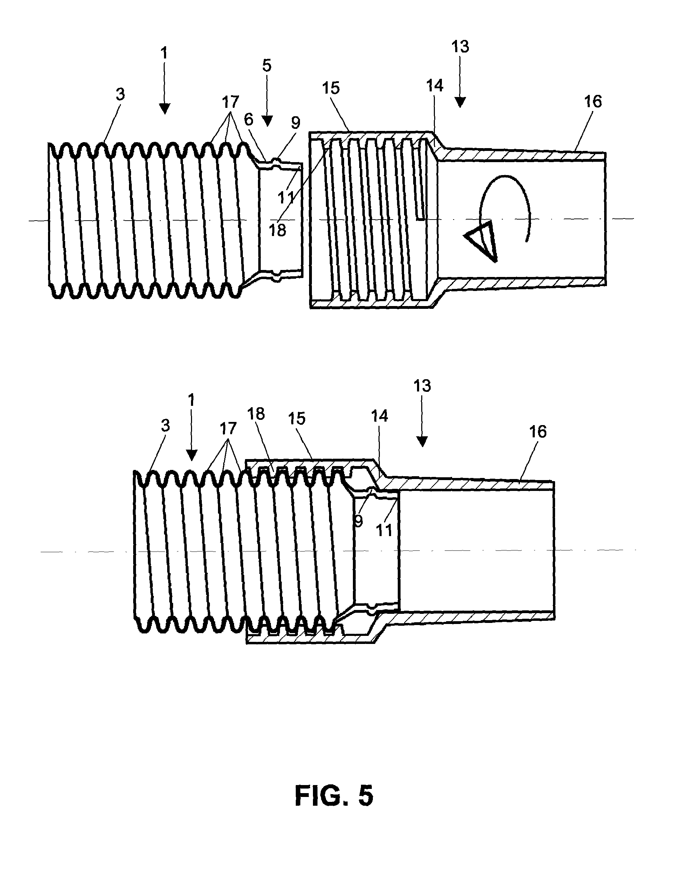

In the embodiments of figures 2 and 5, the flexible corrugated body 3, 4 of each hose section 1, 2 comprises helically wound corrugations 17 with a larger diameter than that of the first and second extremities 5, 7. The first end 15 of the coupling piece comprises an internal screw-thread 18 complementary to the helically wound corrugations 17. As shown, the coupling piece 13 can be very easily connected on one of the hose sections 1, 2 by sliding it over the male/female coupling member 6, 8 and afterwards screwing it onto the corrugations 17. Upon screwing, the corrugations 17 are slightly compressed in axial direction to achieve a tight fit. As shown, the diameter of the coupling piece 13 reduces at the transition from the first end 15 to the second end 16. The shape at this transition also corresponds to the male/female coupling members 6, 8 so that in coupled state the edge 12 of the female coupling member 8 abuts the transition (figure 2) and the edge 11 of the male coupling member 6 can pass by the transition until the annular protrusion 9 abuts the transition.

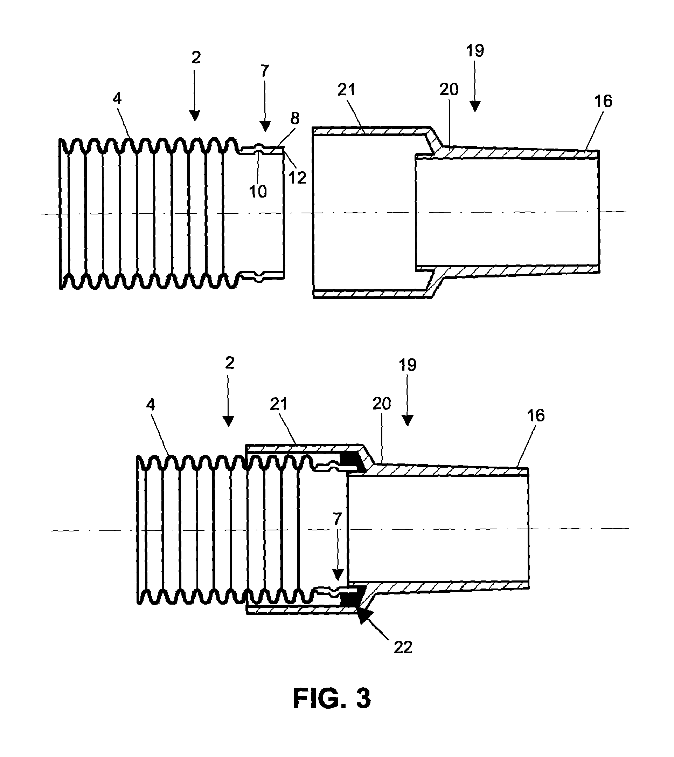

In the embodiment of figure 3, the first end 21 of the coupling piece 19 is permanently welded to one of the extremities 7 of one of the flexible hose sections 2. As shown, the welding is achieved by applying a hot weld 22 in a compartment on the interior of the first end 21. This hot weld 22 can for example be a polymer such as for example: thermoplastic elastomers (Santoprene, Forprene, Vyram,...) polyolefins, polyethylene, metallocene polyolefins, polypropylene, PVC, rubbers or any combination of these materials, or any other material deemed suitable by the person skilled in the art. Depending on the materials it can also be a glue or ultrasonic welding or mechanical connection. The coupling piece 19 is placed on the extremity 7 while the weld is still hot and pressure is applied, as a result of which the materials of the coupling piece 19 and the extremity 7 melt with each other. After cooling, a strong, permanent connection is achieved.

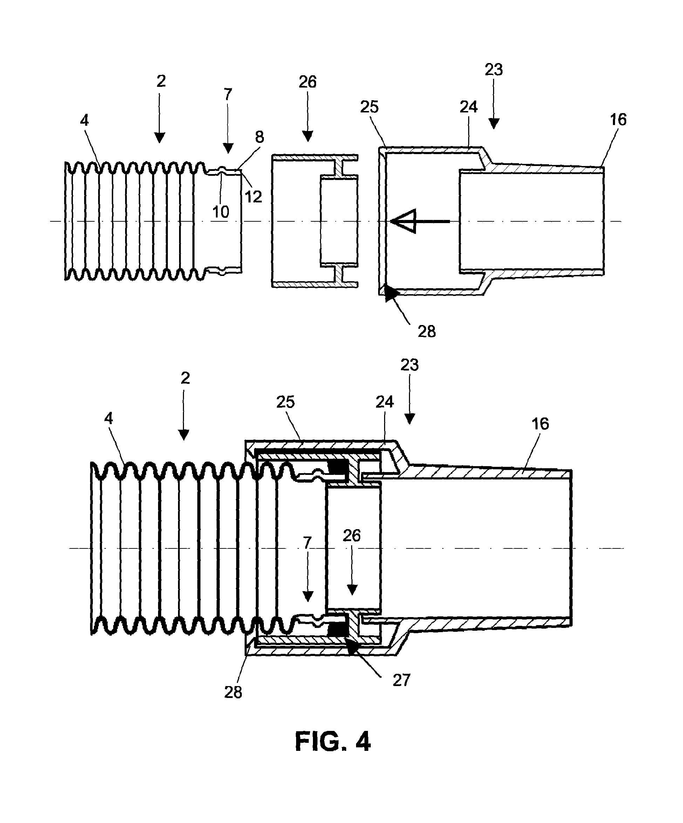

In the embodiment of figure 4, the coupling piece 23 comprises a swivel member 26 which is permanently welded to one of the extremities 7 of one of the flexible hose sections 2. This is also done by means of a hot weld 27 in the same way as described above. Afterwards, the first end 25 of the body 24 of the coupling piece 23 is fitted on the swivel member 26, as a result of which the swivel member 26 is rotatably held in the first end 25 of the body 24. A retaining rim 28 prevents undesired removal of the body 24 from the swivel member 26. This embodiment has the advantage that the coupling piece 23 is permanently connected to one of the flexible hose connections 2, so that undesired removal can be prevented, while still being able to swivel around the extremity 7.

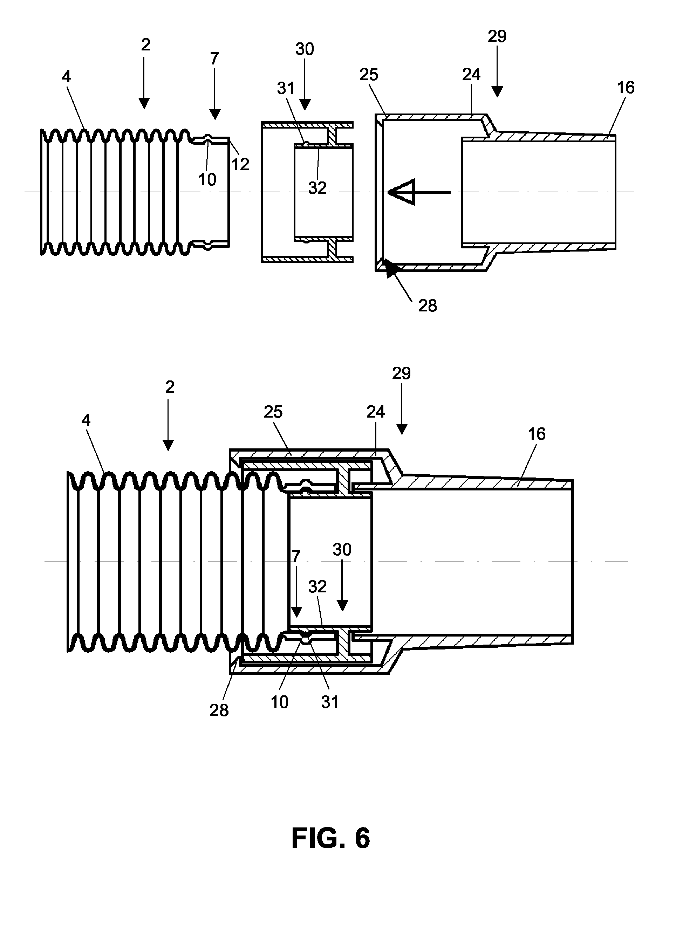

In the embodiment of figure 6, the coupling piece 29 comprises the same body 24 as in figure 4, but with a different swivel member 30. Here, the swivel member 30 internally comprises a male coupling member 32 with an external annular protrusion 31 which is adapted to be snap-fitted into the female coupling member 8 with the internal annular recess 10 of one of the flexible hose sections 2.

The coupling pieces 13, 19, 23, 29 are preferably constructed in one of the following materials: thermoplastic elastomers (Santoprene, Forprene, Vyram,...) polyolefins, polyethylene, metallocene polyolefins, polypropylene, PVC, rubbers or any combination of these materials, or any other material deemed suitable by the person skilled in the art.

The flexible hose combinations with coupling pieces of figures 2-6 are extremely useful in the field of manual and automatic pool cleaning hoses. For application in this field, the second end 16 of the coupling piece and/or the first and/or second extremities 5, 7 of the hose sections 1, 2 are adapted to be connected to a pool skimmer/filter, a manual head for manual pool cleaning and/or an automatic pool cleaner head. More particularly, the flexible hose combinations of figures 2-6 constitute pool cleaning hoses which can be used for both manual and automatic pool cleaning operations, whereas up to now separate hoses are constructed for manual and automatic pool cleaning applications. Suitable possible flexible hose combinations for dual purposes, i.e. both manual pool cleaning and automatic pool cleaners are:
- 9 m: 9 lengths x 1 m (male - female) + 1 screw coupling piece,
- 12 m: 12 lengths x 1 m (male - female) + 1 screw coupling piece,
- 6 m: 6 lengths x 1 m (male - female) as a replacement kit for replacing damaged or lost hose sections, or as enlargement kit.
Suitable packages for these hoses can for example have the following sizes:
- 1000x150x150 mm for lengths of 9 m,
- 1000x200x150 mm for lengths of 12 m,
- 1000x150x100 mm for lengths of 6 m.
These packages are compact, the advantages of which become apparent from the following palletisation possibilities (for pallet dimensions of 1200x1000 mm and a maximal total height of 1200 mm):
- for lengths of 9 m: 48 boxes/pallet or 2496 boxes/truck,
- for lengths of 12 m: 36 boxes/pallet or 1872 boxes/truck,
- for lengths of 6 m: 80 boxes/pallet or 4160 boxes/truck.
As a result, there are big box volume savings of 48% (9 m); 31%(12 m); 45% (6 m). So there is less space needed in the warehouses of manufacturers, customers, distributors, big surface markets, etc. and there is a lower freight cost/m due to the lower volume/m.

## Claims

1. Flexible hose combination comprising a plurality of hose sections (1, 2) which are provided for being connected to each other for forming a long length flexible hose, each hose section having a flexible corrugated body (3, 4) extending between a first extremity (5) with a male coupling member (6) and a second extremity (7) with a female coupling member (8), the male and female coupling members being integral with the flexible corrugated body and being adapted to mate with each other to obtain a substantially fluid-tight connection between the hose sections.

2. Flexible hose combination according to claim 1, **characterised in that** the hose sections have substantially equal lengths.

3. Flexible hose combination according to claim 1 or 2, **characterised in that** the male coupling member (6) is provided with at least one external annular protrusion/recess (9) for engaging a complementary internal annular recess/protrusion (10) in the female coupling member (8).

4. Flexible hose combination according to any one of the claims 1-3, **characterised in that** the length of the male coupling member (6) is such that in coupled state it protrudes into the flexible corrugated body (4) of another of the hose sections (2).

5. Flexible hose combination according to any one of the claims 1-4, **characterised in that** the male and female coupling members (6, 8) have truncated conical shapes.

6. Flexible hose combination according to any one of the claims 1-5, **characterised in that** the flexible hose sections (1, 2) are constructed in a mouldable material by means of a blow/vacuum moulding process.

7. Flexible hose combination according to any one of the previous claims, further comprising a coupling piece (13; 19; 23; 29) for coupling the hose combination to a further tubular member, the coupling piece comprising a rigid hollow body (14; 20; 24) with a first end (15; 21; 25) connected or connectable on one of said extremities (5, 7) and a second end (16) connectable to said further tubular member.

8. Flexible hose combination according to claim 7, **characterised in that** the flexible corrugated body (3, 4) of each hose section comprises helically wound corrugations (17) with a larger diameter than that of the first and/or second extremities (5, 7) and that the first end (15) of the coupling piece comprises an internal screw-thread (18) complementary to the helically wound corrugations (17).

9. Flexible hose combination according to claim 7, **characterised in that** the first end (21) of the coupling piece is permanently welded to one of the extremities (5, 7) of one of the flexible hose sections (1, 2).

10. Flexible hose combination according to claim 7, **characterised in that** the coupling piece (23) comprises a swivel member (26) which is permanently welded to one of the extremities (5, 7) of one of the flexible hose sections (1, 2) and which is rotatably held in the first end (25) of the coupling piece (23).

11. Flexible hose combination according to claim 7, **characterised in that** the coupling piece (29) comprises a swivel member (30) which is adapted for being snap-fitted to one of the extremities (5, 7) of one of the flexible hose sections (1, 2) and which is rotatably held in the first end (25) of the coupling piece.

12. Flexible hose combination according to any one of the claims 7-11, **characterised in that** the flexible hose combination is a pool cleaning hose, the second end (16) of the coupling piece and/or the first and/or second extremities (5, 7) of the hose sections (1, 2) being adapted to be connected to at least one of the following: a pool skimmer/filter, a manual head for manual pool cleaning, an automatic pool cleaning head for automatic pool cleaning.
